# EUROPÄISCHE PATENTSCHRIFT

(11) **EP 3 148 916 B1**
(45) Veröffentlichungstag und Bekanntmachung des Hinweises auf die Patenterteilung: **23.10.2019**
(21) Anmeldenummer: 15721738.1
(22) Anmeldetag: 13.05.2015
(51) Int. Cl.: B66B 23/02, B66B 23/14

(54) **GELENKKETTE EINES FAHRSTEIGES ODER EINER FAHRTREPPE**
ARTICULATED CHAIN OF AN ESCALATOR OR A MOVING WALKWAY
CHAÎNE ARTICULÉE D'UN TROTTOIR ROULANT OU D'UN ESCALIER ROULANT

(30) Priorität: 28.05.2014 EP 14170276
(43) Veröffentlichungstag der Anmeldung: 05.04.2017
(73) Patentinhaber: Inventio AG, 6052 Hergiswil (CH)
(72) Erfinder: SCHULZ, Robert, A-1100 Wien (AT); ILLEDITS, Thomas, A-2491 Neufeld (AT); MATHEISL, Michael, A-2331 Vösendorf (AT)
(86) Internationale Anmeldenummer: PCT/EP2015/060616
(87) Internationale Veröffentlichungsnummer: WO 2015/180965

(56) Entgegenhaltungen:
- GB-A- 491 301
- US-A- 4 883 160
- US-A- 4 930 622
- US-A1- 2012 168 277

## Beschreibung

Die Erfindung betrifft eine Fahrtreppe mit einem Stufenband oder einen Fahrsteig mit einem Palettenband. Das Stufenband oder Palettenband beinhaltet mindestens eine Gelenkkette, an welcher Stufen beziehungsweise Paletten angeordnet sind.

Fahrtreppen und Fahrsteige sind hohen, wechselnden Belastungen durch stark schwankende Benutzerzahlen ausgesetzt und weisen lange Betriebszeiten von 10 bis 18 Stunden pro Tag auf. In Gebäuden des öffentlichen Verkehrs wie beispielsweise auf Flughäfen, in Bahnhöfen oder U-Bahnstationen können Fahrtreppen und Fahrsteige gar rund um die Uhr im Dauereinsatz stehen. Dementsprechend sind die bewegten Teile dieser Transporteinrichtungen hohem Verschleiss unterworfen und müssen daher intensiv und gründlich gewartet werden. Zu den Teilen mit starker Abnutzung (Verschleißteile) die periodisch zu ersetzen sind, gehören die Gelenkketten des Palettenbandes oder des Stufenbandes sowie die in den Umlenkbereichen angeordneten Kettenräder. Ein Kettenrad dient der Umlenkung der Gelenkkettenstränge je nach Laufrichtung des Stufenbandes oder Palettenbandes von einem Vorlauf in einen Rücklauf beziehungsweise vom Rücklauf in den Vorlauf. Zudem kann die Gelenkkette durch ein Kettenrad angetrieben werden. An den Gelenkketten sind üblicherweise Laufrollen befestigt, um zumindest im Vorlauf das Palettenband oder Stufenband mittels zwischen den Umlenkbereichen angeordneten Laufschienen zu führen und gegen die Schwerkraft abzustützen.

Gattungsgemäße Gelenkketten mit Laufrollen werden beispielsweise in der US 4 883 160 A, in der US 4 930 622 A und in der GB 491 301 A offenbart.

In den letzten Jahren wurden vermehrt flachbauende Fahrtreppen und Fahrsteige entwickelt. Diese weisen für den Kunden viele bautechnische Vorteile auf. Beispielsweise kann bei Fahrsteigen mit geringen Bauhöhen auf eine Grube im Boden verzichtet werden, oder es ist nur noch eine Grube mit geringer Tiefe notwendig. Fahrtreppen mit geringeren Bauhöhen können einfacher in bestehende Gebäude eingebaut werden, da der zur Verfügung stehende Einbauraum der entfernten, alten Fahrtreppe meistens ausreichend ist. Gegebenenfalls kann das Tragwerk der zu ersetzenden Fahrtreppe belassen und die neue Fahrtreppe in das alte Tragwerk beziehungsweise Fachwerk eingefügt werden.

Um eine flachbauende Fahrtreppe oder einen flachbauenden Fahrsteig zu konstruieren, muss insbesondere der Durchmesser des Förderkettenrades und des Umlenkkettenrades reduziert werden. Dies führt zu einer grossen Auslenkung der Kettenglieder beziehungsweise Kettenlaschen der Gelenkkette im Bereich des Umlenkkettenrades beziehungsweise Förderkettenrades. Ferner nimmt bei gleicher Teilung aber mit abnehmendem Teilkreisdurchmesser des Kettenrades und damit mit abnehmender Zähnezahl der sogenannte Polygoneffekt, eine ungleichförmige Bewegung des Stufenbandes oder Palettenbandes, zu. Verschiedene Massnahmen zur Eliminierung des Polygoneffekts werden beispielsweise in der EP 1 876 135 B1 offenbart.

Diese Massnahmen ermöglichen die Verwendung von langen Kettenlaschen beziehungsweise Kettengliedern zusammen mit kleinen Umlenkkettenrädern und Förderkettenrädern, ohne dass ein Polygoneffekt auftritt oder dieser zumindest für den Benutzer kaum spürbar ist. Die langen Gelenkstellenabstände der Gelenkkette erhöhen aber zusätzlich den Auslenkungswinkel in den Gelenkstellen und es sind bei vorgegebenem Teilkreisdurchmesser am Umfang des Kettentrades weniger Zähne mit der Gelenkkette im Eingriff, wodurch die Flächenpressung an den Laufrollen und damit deren Verschleiss wesentlich höher ist als bei Kettenrädern mit gleicher Teilung und größerem Teilkreisdurchmesser. Zwar werden in der EP 1 876 135 B1 auch Laufrollen aus Stahl erwähnt, welche verschleißfester sind als die Kunststoff- Laufrollen, diese Stahlrollen verursachen aber auf den Laufschienen erhebliche Betriebsgeräusche.

Die Aufgabe der vorliegenden Erfindung ist daher, zumindest in den Umlenkbereichen einen flachbauenden Fahrsteig beziehungsweise eine flachbauende Fahrtreppe zu schaffen, deren Gelenkketten mit Laufrollen eine hohe Lebensdauer und einen ruhigen, geräuscharmen Lauf aufweisen.

Diese Aufgabe wird gelöst durch eine Fahrtreppe mit einem Stufenband oder einen Fahrsteig mit einem Palettenband, wobei das Stufenband oder Palettenband mindestens eine Gelenkkette beziehungsweise Förderkette aufweist, die zwischen einem ersten Umlenkbereich und einem zweiten Umlenkbereich der Fahrtreppe oder des Fahrsteiges umlaufend angeordnet ist. An der Gelenkkette sind Laufrollen sowie Stufen beziehungsweise Paletten angeordnet. Die Gelenkkette weist zudem Systemrollen auf, wobei die Laufrollen und Systemrollen auf zumindest drei zur Umlaufrichtung der Gelenkkette nebeneinanderliegenden Spuren angeordnet sind. Eine der Spuren ist durch die Laufrollen belegt und zumindest zwei der Spuren sind durch die Systemrollen belegt.

Das Merkmal Spur bezeichnet im Sinne der vorliegenden Erfindung einen parallel zur Längserstreckung beziehungsweise Umlaufrichtung des Palettenbandes oder Stufenbandes sich erstreckenden Bewegungsraum, in dem sich nur die dieser Spur zugeordneten Laufrollen beziehungsweise Systemrollen bewegen. Demzufolge bewegen sich die den anderen Spuren zugeteilten Laufrollen beziehungsweise Systemrollen niemals in diesem Bewegungsraum, sondern in den ihnen zugeordneten Bewegungsräumen. Eine andere Bezeichnung für Spur könnte auch Laufstrecke oder Bewegungsstrecke sein. Durch die Aufteilung der an der Gelenkkette angeordneten Laufrollen und Systemrollen auf drei Spuren, können die auftretenden Belastungsfälle und Funktionen auf die Spuren aufgeteilt werden und die Eigenschaften der Laufrollen beziehungsweise Systemrollen auf die in ihrer Spur auftretenden Belastungsfälle beispielsweise mittels Berechnungen und Tests optimal abgestimmt werden.

Beispielsweise können die einer Spur zugeordneten Laufrollen zwischen den Umlenkbereichen auf Laufschienen beziehungsweise Laufbahnen abrollen und dadurch das Stufenband oder Palettenband gegen die Schwerkraft abstützen, während die in den anderen Spuren angeordneten Systemrollen zwischen den Umlenkbereichen zumindest abschnittsweise freigestellt und somit unbelastet sind. Die beispielsweise aus Kunststoff gefertigten Laufrollen ermöglichen einen sehr geräuscharmen Lauf des Stufenbandes oder Palettenbandes auf den Laufschienen, während die beispielsweise aus Stahl gefertigten Systemrollen zumindest in den freigestellten Abschnitten ohne Berührung mit einem ortsfesten Teil der Fahrtreppe oder des Fahrsteiges sind und daher keine lauten Laufgeräusche verursachen. In den Umlenkbereichen können dann die Systemrollen mindestens einer der Spuren in Eingriff mit einem Kettenrad des Umlenkbereichs sein und die Laufrollen freigestellt sein, damit die Laufrollen nicht überbeansprucht werden, da in den Umlenkbereichen die Spannkraft einer Spannvorrichtung des Palettenbandes oder Stufenbandes und die Vortriebskraft des vom Antrieb angetriebenen Kettenrades nur auf wenige Systemrollen aufgeteilt sind. Da die Systemrollen im Umlenkbereich nur wenige Umdrehungen machen, entstehen nur sehr geringe Geräusche. Selbstverständlich können die Systemrollen auch aus mindestens einem der nachfolgend aufgeführten Materialein gefertigt sein, beispielsweise aus rostfreiem Stahl, Sintermetall, Bronze, Messing, Kupfer und/oder hochfesten, harten Kunststoffen.

Wenn die Systemrollen nur einer Spur über ein Kettenrad geführt sind, können beispielsweise die Systemrollen der zweiten Spur auf einer Umlenkkurve des Umlenkbereichs abgestützt sein. Im jeweiligen Umlenkbereich können die Systemrollen beispielsweise an einem Grundkreis des Kettenrades aufliegen. Um den Polygoneffekt gemäß der Lehre der EP 1 876 135 B1 weitgehend zu eliminieren, kann der Grundkreisradius kleiner sein als ein Radius der Umlenkkurve.

Selbstverständlich kann auch ein Kettenrad im Umlenkbereich vorhanden sein, das mit beiden Spuren korrespondiert und damit mit den Systemrollen beider Spuren in Eingriff steht. Dabei können die Grundkreisdurchmesser der beiden Spuren dieses Kettenrades unterschiedlich groß dimensioniert sein.

Vorzugsweise sind die Systemrollen und Laufrollen an den Gelenkstellen der Gelenkkette angeordnet, wodurch eine richtungsstabile Führung der einzelnen Kettenglieder der Gelenkkette ermöglicht wird.

Selbstverständlich sind auch andere Anordnungen möglich, beispielsweise dass die Systemrollen an Gelenkstellen der Gelenkkette und die Laufrollen jeweils zwischen den Gelenkstellen an den Kettenlaschen der Gelenkkette angeordnet sind.

Vorzugsweise ist die Gelenkkette aus Kettengliedern mit jeweils parallel zueinander angeordneten, voneinander quer zur Längserstreckung der Kettenglieder beabstandeten Kettenlaschen gebildet. Dadurch können beispielsweise die Systemrollen zwischen den Kettenlaschen der Kettenglieder und die Laufrollen an einer Außenseite der Kettenglieder beziehungsweise der Kettenlaschen der Gelenkkette angeordnet werden.

Um möglichst viele gleich gefertigte Teile verwenden zu können und dadurch die Zahl unterschiedlicher Teile des fertigen Produkts zu minimieren, können die Systemrollen der mindestens einen Gelenkkette abgestuft ausgebildet sein, wobei diese in einer ersten Hälfte ihrer Rollenbreite einen ersten Rollendurchmesser und in einer zweiten Hälfte ihrer Rollenbreite einen zum ersten Rollendurchmesser kleineren zweiten Rollendurchmesser aufweisen. Diese Systemrollen können bezogen auf ihre abgestufte Ausgestaltung so an der Gelenkkette angeordnet werden, dass durch einen ersten Teil der Systemrollen mit ihren ersten Rollendurchmessern die erste Spur und durch einen zweiten Teil der Systemrollen mit ihren ersten Rollendurchmessern die zweite Spur belegt sind.

Selbstverständlich müssen die Systemrollen nicht zwingend abgestuft gefertigt sein. Sie können wie die Laufrollen auch scheibenförmig ausgebildet sein. Derart gefertigte Systemrollen der mindestens einen Gelenkkette können auch in erste Systemrollen und zweite Systemrollen aufgeteilt, und die ersten Systemrollen zu den zweiten Systemrollen in alternierender Abfolge versetzt an der Gelenkkette angeordnet werden, so dass durch die ersten Systemrollen und die zweiten Systemrollen zwei nebeneinanderliegende Spuren belegt sind. Die alternierende Abfolge kann auf verschiedene Weise erfolgen. Die erste Möglichkeit besteht darin, die ersten Systemrollen zwischen den Kettenlaschen der Kettenglieder und die zweiten Systemrollen an einer Außenseite der Gelenkkette anzuordnen. Die zweite Möglichkeit besteht darin, sowohl die ersten als auch die zweiten Systemrollen zwischen den Kettenlaschen der Kettenglieder anzuordnen und mittels Distanzhülsen oder Zwischenstücken die alternierende Abfolge zu erzeugen.

Die Systemrollen können aber nicht nur in den Umlenkbereichen zur Abstützung und Führung des Stufenbandes beziehungsweise Palettenbandes dienen. Sie können auch zur abschnittsweisen Entlastung der Laufrollen herangezogen werden. Um dies zu erreichen, kann parallel zu einem Längenabschnitt der Laufschiene beziehungsweise Laufbahn mindestens eine Stützschiene im Bereich mindestens einer der beiden durch Systemrollen belegten Spuren angeordnet sein, um die über die Stützschiene rollenden Systemrollen abzustützen. Diese Stützschienen, beispielsweise in Ablenkbereichen der Fahrtreppe oder des Fahrsteiges angeordnet, können dabei einen Teil der in diesen Abschnitten auftretenden und auf die Laufrollen einwirkenden hohen Kräfte aufnehmen beziehungsweise abstützen. Um eine ausgeglichene Aufteilung zwischen den beispielsweise aus Kunststoff gefertigten Laufrollen und den beispielsweise aus Stahl gefertigten Systemrollen zu erreichen, kann die Stützschiene oder zumindest deren Lauffläche aus Kunststoff gefertigt sein. Ferner dämpft eine aus Kunststoff gefertigte Stützschiene in diesem Abschnitt auch die Betriebsgeräusche der Fahrtreppe oder des Fahrsteiges. Selbstverständlich können die Stützschienen auch aus rostfreiem Stahl, aus Bronze, Messing, Kupfer und/oder hochfesten, harten Kunststoffen gefertigt sein.

Selbstverständlich können die vorangehend beschriebenen Gelenkketten nicht nur in neuen Fahrsteigen oder Fahrtreppen verwendet werden. Beispielsweise kann ein bestehender Fahrsteig oder eine bestehende Fahrtreppe dadurch modernisiert werden, dass das bestehende Palettenband beziehungsweise Stufenband durch ein Palettenband beziehungsweise Stufenband mit den vorangehend beschriebenen, mehrspurigen Gelenkketten ersetzt wird. Gegebenenfalls müssen die Umlenkbereiche, die Laufschienen und die Kettenräder an die neuen Gelenkketten angepasst werden.

Selbstverständlich kann auch bei diesen umgebauten Fahrtreppen und Fahrsteigen parallel zu mindestens einem Längenabschnitt mindestens einer, zwischen den Umlenkbereichen angeordneten Laufschiene mindestens eine Stützschiene im Bereich mindestens einer der durch Systemrollen belegten Spuren angeordnet sein, um die über die Stützschiene rollenden Systemrollen abzustützen.

Die Fahrtreppe oder der Fahrsteig mit mindestens einer Gelenkkette mit auf zumindest drei Spuren aufgeteilten Laufrollen beziehungsweise Systemrollen wird im Folgenden anhand von Ausführungsbeispielen und mit Bezugnahme auf die Zeichnungen näher erläutert. Darin zeigen:
- Figur 1:: in der Seitenansicht in schematischer Darstellung eine Fahrtreppe, welche ein umlaufendes Stufenband aufweist das zwischen einem ersten Umlenkbereich und einem zweiten Umlenkbereich angeordnet ist;
- Figur 2:: in der Seitenansicht in schematischer Darstellung ein Kettenrad des in Figur 1 dargestellten zweiten Umlenkbereichs sowie ein Teil einer Gelenkkette des Stufenbandes;
- Figur 3:: in dreidimensionaler Ansicht ein Umlenkbereich eines Fahrsteiges mit einem Förderkettenrad, einer Umlenkkurve und mit einer Gelenkkette, die abgestufte Systemrollen aufweist;
- Figur 4:: in dreidimensionaler Ansicht der in der Figur 3 dargestellte Umlenkbereich gemäß der in Figur 3 angegebenen, vertikalen Schnittebene C - C.

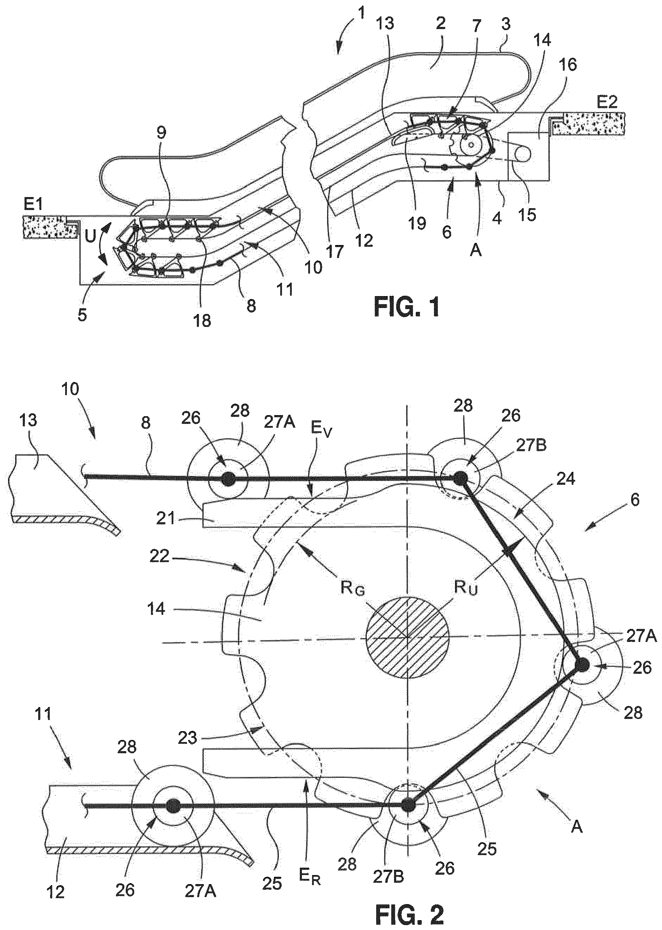

Die Figur 1 zeigt schematisch in der Seitenansicht eine Fahrtreppe 1 mit einer Balustrade 2 und mit einem die Balustrade 2 umlaufenden Handlauf 3. Die Fahrtreppe 1 verbindet ein unteres Stockwerk E1 mit einem oberen Stockwerk E2, wobei ein als Fachwerk ausgestaltetes Tragwerk 4 als Träger für die Balustrade 2 und als Einbaurahmen für weitere Komponenten der Fahrtreppe 1 dient. Das Tragwerk 4 weist ferner einen ersten Umlenkbereich 5 und einen zweiten Umlenkbereich 6 auf. Zwischen dem ersten Umlenkbereich 5 und dem zweiten Umlenkbereich 6 ist ein Stufenband 7 umlaufend im Tragwerk 4 angeordnet. Die Umlaufrichtung U des Stufenbandes 7 kann beliebig wählbar aufwärtsfördernd oder abwärtsfördernd sein. Das Stufenband 7 weist mindestens eine, in der Figur 1 nur teilweise dargestellte Gelenkkette 8 auf, an welcher Stufen 9 angeordnet sind. Das Stufenband 7 weist einen Vorlauf 10 auf, mittels dem Personen und Gegenstände transportiert werden und einen Rücklauf 11 auf, der der Rückführung der Stufen 9 dient. Die Stufen 9 und die Gelenkkette 8 werden im Vorlauf 10 mittels Laufschienen 13 und im Rücklauf 11 mittels Laufschienen 12 geführt. Bei Fahrtreppen 1 sind üblicherweise noch Führungsschienen 17 vorhanden, welche zwischen den Umlenkbereichen 5, 6 die an den Stufen 9 angeordneten Schlepprollen 18 führen.

Zur Umlenkung des Stufenbandes 7 ist im ersten Umlenkbereich 5 mindestens ein Kettenrad oder eine Umlenkführung angeordnet, welche hier aus Gründen der Übersicht nur andeutungsweise dargestellt ist. Im zweiten Umlenkbereich 6 ist ein Kettenrad 14 angeordnet, welches mittels eines Antriebsstranges 15 mit einem Antriebsmotor 16 verbunden ist. Das Kettenrad 14 greift in die Gelenkkette 8 ein und überträgt dadurch formschlüssig die Drehbewegung des Antriebsmotors 16 auf die Gelenkkette 8 und damit auf das Stufenband 7.

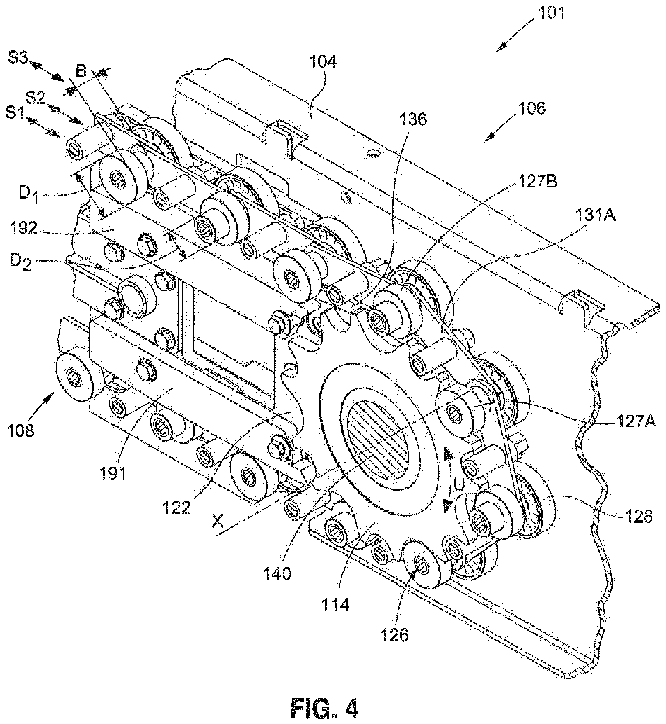

Im zweiten Umlenkbereich 6 ist zudem eine Stützschiene 19 angedeutet, deren Funktion in Zusammenhang mit der Figur 4 näher beschrieben wird.

In Figur 2 ist die Detailansicht A der Figur 1 grösser dargestellt und zeigt schematisch die Gelenkkette 8, welche um das Kettenrad 14 des Umlenkbereichs 6 geführt ist. Die Gelenkkette 8 ist der besseren Übersicht wegen schematisch dargestellt und beinhaltet Kettenlaschen 25, Gelenkstellen 26 sowie im Bereich der Gelenkstellen 26 angeordnete Systemrollen 27A, 27B und Laufrollen 28.

Bezogen auf die Bildebene der Figur 2 sind die Systemrollen 27A, 27B und die Laufrollen 28 auf unterschiedlichen Ebenen zum Auge des Betrachters und damit auf unterschiedlichen Spuren angeordnet. Diesen Spuren sind auch unterschiedliche Teile des Umlenkbereichs 6 zugeordnet. Auf der dem Auge des Betrachters nächstliegenden Ebene beziehungsweise Spur sind eine Kurvenscheibe 21 und die ersten Systemrollen 27A angeordnet. Die ersten Systemrollen 27A laufen im Umlenkbereich 6 somit über die Umlenkkurve 21.

Auf der darunter liegenden Ebene beziehungsweise Spur sind das Kettenrad 14 sowie die zweiten Systemrollen 27B angeordnet. Die zweiten Systemrollen 27B liegen im Umlenkbereich 6 in den Zahnlücken 22 des Kettenrades 14 an einem Grundkreisradius R_{G} an, wobei die zur Bildebene orthogonal angeordneten Schwenkachsen der Gelenkstellen 26 auf dem Teilkreisdurchmesser 23 liegen.

Auf der dem Auge des Betrachters am weitesten entfernt liegenden Ebene beziehungsweise Spur sind die Laufrollen 28 sowie die dem Umlenkbereich 6 anschließenden Laufschienen 12, 13 angeordnet.

Unter der Annahme, dass sich das Förderkettenrad 14 im Uhrzeigersinn dreht, verlassen die Laufrollen 28 fortlaufend die Laufschiene 13 des Vorlaufs 10 und gelangen erst wieder in Berührung mit einem Teil der Fahrtreppe 1, wenn sie die Laufschiene 12 des Rücklaufs 11 erreichen. Die bis zum Umlenkbereich 6 unbelasteten ersten Systemrollen 27A rollen über eine Lauffläche 24 der Umlenkkurve ab, wobei diese Lauffläche 24 von einer nahezu geraden Einführungsstrecke E_{V} des Vorlaufs 10 in einen Umlenkradius R_{U} und von diesem Umlenkradius R_{U} wieder in eine nahezu gerade Einführungsstrecke E_{R} des Rücklaufs 11 übergeht.

Des Weiteren gelangen in dem durch die Gelenkkette 8 umschlungenen Bereich des Kettenrades 14 die zweiten Systemrollen 27B in Anlage mit den Zahnlücken 22 und liegen dort am Grundkreis R_{G} auf. Da dieser Grundkreis R_{G} kleiner ist als der Umlenkradius R_{U}, bewegen sich die Schwenkachsen der Gelenkstellen 26, in denen erste Systemrollen 27A angeordnet sind, nicht auf dem Teilkreisdurchmesser 23 des Kettenrades 14 sondern auf einer durch die Form der Lauffläche 24 und den Durchmesser der ersten Systemrollen 27A vorgegebenen Kurve. Aufgrund dieser Auslegung kann ein Kettenrad 14 mit kleinem Grundkreisdurchmesser R_{G} mit einer Gelenkkette 8 mit weit auseinander liegenden Gelenkstellen 26 kombiniert werden, ohne dass ein signifikanter Polygoneffekt eintritt. Dabei wird der Polygoneffekt ausschließlich durch die hoch belastbaren Systemrollen 27A, 27B gemäß der Lehre der EP 1 876 135 B1 eliminiert, während die aus Kunststoff gefertigten oder Kunststoffbandagen aufweisenden Laufrollen 28 völlig unbelastet die Umlenkbereiche 5, 6 durchlaufen.

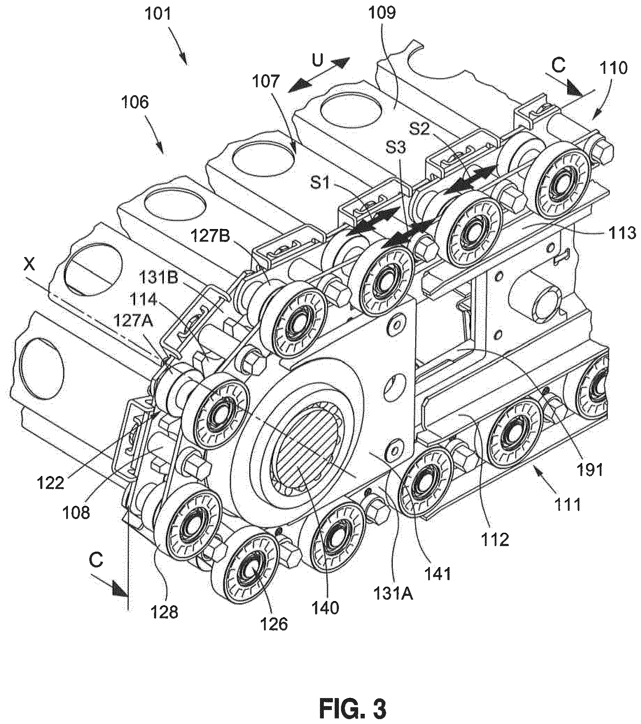

Figur 3 zeigt in dreidimensionaler Ansicht einen Umlenkbereich 106 eines nicht weiter dargestellten Fahrsteiges 101 mit einem Palettenband 107. Fahrsteige 101 unterscheiden sich im prinzipiellen Aufbau nur in wenigen Bereichen von den Fahrtreppen. Die wesentlichen Unterschiede liegen darin, dass Fahrsteige 101 ein Palettenband anstelle eines Stufenbandes aufweisen und keine Führungsschienen wie die Fahrtreppen benötigen, um die Schlepprollen der Stufen zu führen.

Die Figur 3 zeigt bezogen auf die Längserstreckung des Fahrsteiges 101 nur die rechte Hälfte des Palettenbandes 107 und des Umlenkbereichs 106. Die nicht dargestellte linke Hälfte des Umlenkbereichs 106 und Palettenbandes 107 ist zur rechten Hälfte spiegelsymmetrisch aufgebaut. Das vorliegende Ausführungsbeispiel umfasst damit zwei parallel zueinander und zwischen zwei Umlenkbereichen 106 umlaufend angeordnete Gelenkketten 108, zwischen denen eine Vielzahl Paletten 109 die beiden Gelenkketten 108 miteinander verbindend, angeordnet sind. Aus Gründen der Übersichtlichkeit sind nur die Grundkörper der Paletten 109 ohne daran befestigte Trittplatten dargestellt. Das Palettenband 107 ist somit im Wesentlichen gleich aufgebaut wie ein Stufenband, wobei anstelle von Stufen die Paletten 109 an mindestens einer Gelenkkette 108 angeordnet sind. Die Umlaufrichtung U des Palettenbandes 107 ist ebenfalls in beiden möglichen Richtungen beliebig wählbar. Die Gelenkkette 108 weist eine Vielzahl von Kettenlaschen 131A, 131B auf, die durch Gelenkstellen 126 miteinander verbunden sind. An jeder der Gelenkstellen 126 ist entweder eine erste Systemrolle 127A oder eine zweite Systemrolle 127B zwischen den Kettenlaschen 131A, 131B angeordnet. Die ersten Systemrollen 127A und die zweiten Systemrollen 127 B sind identisch gefertigte Bauteile und unterscheiden sich nur aufgrund ihrer Einbaulage zwischen den Kettenlaschen 131A, 131B.

Um weitere, in der Figur 3 durch Teile des Umlenkbereichs 106 und des Palettenbandes 107 verborgene Bereiche darzustellen, zeigt die Figur 4 eine dreidimensionale Ansicht des in der Figur 3 dargestellten Umlenkbereichs 106 in der dort angegebenen, vertikalen Schnittebene C - C. Nachfolgend werden die beiden Figuren 3 und 4 unter Verwendung derselben Bezugszeichen gemeinsam beschrieben.

Die Systemrollen 127A, 127B der mindestens einen Gelenkkette 108 sind abgestuft ausgebildet und können wie dargestellt, eine komplett identische Gestalt aufweisen. Sie weisen in der ersten Hälfte ihrer Systemrollenbreite B einen ersten Rollendurchmesser D₁ und in der zweiten Hälfte ihrer Systemrollenbreite B einen zum ersten Rollendurchmesser D₁ kleineren zweiten Rollendurchmesser D₂ auf. Die Systemrollen 127A, 127B sind mit ihrer abgestuften Ausgestaltung alternierend zwischen den Kettenlaschen 131A, 131B angeordnet, so dass sich die ersten Systemrollen 127A mit ihren ersten Rollendurchmessern D₁ auf einer ersten Spur S1 und die zweiten Systemrollen 127B mit ihren ersten Rollendurchmessern D₁ auf einer zweiten Spur S2 bewegen.

Im Umlenkbereich 106 ist ein Kettenrad 114 um eine Drehachse X drehbar angeordnet. Das Förderkettenrad 114 ist zur ersten Spur S1 ausgerichtet und weist nahezu deren Spurbreite auf. Neben dem Förderkettenrad 114 und zur zweiten Spur S2 ausgerichtet ist eine Umlenkkurve 136 vorhanden, welche nur in der Figur 4 knapp sichtbar ist. Der Kurvenmittelpunkt der Umlenkkurve 136 ist präzise zur Drehachse X des Förderkettenrades 114 ausgerichtet. Obwohl die Teilung des Kettenrades 114 den Abständen der Gelenkstellen 126 entspricht, greifen aufgrund ihrer abgestuften Rollendurchmesser D₁, D₂ und der alternierenden Anordnung nur die ersten Systemrollen 127A mit ihrem ersten Rollendurchmesser D₁ in die Zahnlücken 122 des Förderkettenrades 114 ein. Da die zweiten Durchmesser D₂ wesentlich kleiner sind als die ersten Durchmesser D₁, berühren die zweiten Durchmesser D₂ der ersten Systemrollen 127A die Umlenkkurve 136 nicht. Die zweiten Systemrollen 127B rollen mit ihren ersten Rollendurchmessern D₁ über die Umlenkkurve 136, wodurch deren zweite Rollendurchmesser D₂ im ganzen Umlenkbereich 106 vom Kettenrad 114 beabstandet bleiben.

Auf der dritten Spur S3 bewegen sich ausschließlich Laufrollen 128. Die Laufrollen 128 des Palettenbandes 107 werden zwischen den beiden Umlenkbereichen 106 des Fahrsteiges 101 auf Laufschienen 112, 113 geführt und stützen das Palettenband 107 gegen die Schwerkraft ab. Wie aus der Figur 3 ersichtlich ist, enden die Laufschienen 113 des Vorlaufs 110 und die Laufschienen 112 des Rücklaufs 111 unmittelbar vor dem Umlenkbereich 106. Im Umlenkbereich 106 sind die Laufrollen 128 komplett freigestellt und daher unbelastet.

Der Rollenkörper der Laufrolle 128 kann aus mehreren Werkstoffen gefertigt sein, so dass beispielsweise deren Lauffläche beziehungsweise Bandage aus Kunststoff und deren Rollenkörper beziehungsweise Felge aus Metall, beispielsweise Stahl gefertigt sind. Selbstverständlich sind auch weitere Materialien wie Aluminium, Bronze, glasfaserverstärkte aramidfaserverstärkte und kohlefaserverstärkte Kunststoffe zur Herstellung von Rollenkörpern verwendbar und können ihren Eigenschaften entsprechend miteinander kombiniert werden. Dasselbe gilt natürlich auch für die Rollenkörper der Systemrollen, wobei aufgrund der auftretenden Belastung im Umlenkbereich 106 und im Hinblick auf die Fertigungskosten vorzugsweise ein komplett aus Stahl gefertigter Rollenkörper verwendet wird.

In der Figur 3 ist eine von zwei Stützschienen 191, 192 erkennbar, welche parallel zu den Laufschienen 112, 113 angeordnet sind. Beide Stützschienen 191, 192 sind in der Figur 4 wesentlich besser erkennbar. Die Stützschienen 191, 192 sind so breit ausgestaltet, dass sie sowohl in der ersten Spur S1 als auch in der zweiten Spur S2 als Abstützung für die ersten Systemrollen 127A und die zweiten Systemrollen 127B dienen und dadurch in diesem Abschnitt (entspricht im Wesentlichen der Länge der Stützschienen 191, 192) das Palettenband 107 zusammen mit den Laufrollen 128 gegen die Schwerkraft abstützen. Die Stützschienen 191, 192 können aus Metall, aber auch aus einem Kunststoff gefertigt sein. Sofern die Systemrollen 127A, 127B aus Stahl gefertigt sind, ist zwecks einer Dämpfung der Laufgeräusche eine zumindest teilweise aus Kunststoff gefertigte Stützschiene 191, 192 vorzuziehen. Die in den Umlenkbereichen 106 angeordneten Stützschienen 191, 192 können beispielsweise in ihrer Lage relativ zum Kettenrad 114 einstellbar sein, damit die Übergänge von den Laufschienen 112, 113 zur Umlenkkurve 136 möglichst optimal einjustierbar sind.

Die Figur 4 zeigt zudem, dass das Kettenrad 114 an einer Welle 140 befestigt ist. Die Welle 140 ist in einem in der Figur 3 dargestellten Lagerbock 141 drehbar gelagert. Der Lagerbock 141 ist mit dem in Figur 4 dargestellten Rahmenabschnitt 104 beziehungsweise Tragwerkabschnitt 104 beziehungsweise Fachwerkabschnitt 104 fest verbunden.

Wie bereits in Zusammenhang mit der Figur 1 erwähnt, können zwischen den beiden Umlenkbereichen 5, 6, 106 einer Fahrtreppe 1 oder eines Fahrsteiges 101 abschnittsweise weitere Stützschienen 19, 191, 192 parallel zu den Laufschienen 12, 13, 112, 113 angeordnet sein, um in diesen Abschnitten die Laufrollen 28, 128 zu entlasten. Solche Stützschienen 19, 191, 192 sind auch deutlich schneller und einfacher ersetzbar, als die große Anzahl von Laufrollen 28, 128 eines Stufenbandes 7 oder Palettenbandes 107.

Alle Ausführungsbeispiele lassen sich sowohl bei Fahrtreppen mit einem Stufenband als auch bei Fahrsteigen mit einem Palettenband einsetzen. In den Umlenkbereichen sind entsprechend den beschriebenen Ausführungsbeispielen sinnvollerweise für jede der beiden Gelenkketten Kettenräder vorzusehen. Sofern ein Kettenrad kein Drehmoment übertragen muss, kann es auch durch eine Umlenkkurve beziehungsweise durch einen Umlenkbogen oder Spannbogen ersetzt werden.

## Patentansprüche

1. Fahrtreppe (1) mit einem Stufenband (7) oder Fahrsteig (101) mit einem Palettenband (107), wobei das Stufenband (7) oder Palettenband (107) mindestens eine Gelenkkette (8, 108) aufweist, die zwischen einem ersten Umlenkbereich (5) und einem zweiten Umlenkbereich (6, 106) der Fahrtreppe (1) oder des Fahrsteiges (101) umlaufend angeordnet ist und an der Gelenkkette (8, 108) Laufrollen (28, 128) sowie Stufen (9) beziehungsweise Paletten (109) angeordnet sind, wobei die Gelenkkette (8, 108) zudem Systemrollen (27A, 27B, 127A, 127B) aufweist und die Laufrollen (28, 128) und Systemrollen (27A, 27B, 127A, 127B) auf zumindest drei zur Umlaufrichtung (U) der Gelenkkette (8, 108) nebeneinanderliegenden Spuren (S1, S2, S3) angeordnet sind und wobei eine der Spuren (S3) durch die Laufrollen (28, 128) belegt ist und zumindest zwei der Spuren (S1, S2) durch die Systemrollen (27A, 27B, 127A, 127B) belegt sind, **dadurch gekennzeichnet, dass** die Laufrollen (28, 128) zwischen den Umlenkbereichen (5, 6, 106) auf Laufschienen (12, 13, 112, 113) abrollen und die Systemrollen (27A, 27B, 127A, 127B) zwischen den Umlenkbereichen (5, 6, 106) zumindest abschnittsweise freigestellt und somit unbelastet sind, und dass in den Umlenkbereichen (5, 6, 106) die Systemrollen (27A, 27B, 127A, 127B) mindestens einer der Spuren (S1, S2, S3) in Eingriff mit einem Kettenrad (14, 114) des Umlenkbereichs (5, 6, 106) sind und die Laufrollen (28, 128) freigestellt sind.

2. Fahrtreppe (1) oder Fahrsteig (101) nach Anspruch 1, wobei im jeweiligen Umlenkbereich (5, 6, 106) die Systemrollen (27B, 127B) der zweiten Spur (S2) auf einer Umlenkkurve (21, 136) des Umlenkbereichs (5, 6, 106) abgestützt sind.

3. Fahrtreppe (1) oder Fahrsteig (101) nach Anspruch 2, wobei im jeweiligen Umlenkbereich (5, 6, 106) die Systemrollen (27A, 27B, 127A, 127B) an einem Grundkreis (R_{G}) des Kettenrades (14, 114) aufliegen, und der Grundkreisradius (R_{G}) kleiner ist als ein Radius (Ru) der Umlenkkurve (21, 136).

4. Fahrtreppe (1) oder Fahrsteig (101) nach einem der Ansprüche 1 bis 3, wobei die Systemrollen (27A, 27B, 127A, 127B) und Laufrollen (28, 128) an Gelenkstellen (26, 126) der Gelenkkette (8, 108) angeordnet sind.

5. Fahrtreppe (1) oder Fahrsteig (101) nach einem der Ansprüche 1 bis 4, wobei die Gelenkkette (8, 108) aus Kettengliedern mit jeweils parallel zueinander angeordneten Kettenlaschen (25, 131A, 131B) gebildet ist und die Systemrollen (27A, 27B, 127A, 127B) zwischen den Kettenlaschen (25, 131A, 131B) und die Laufrollen (28, 128) an einer Außenseite der Kettenlaschen (25, 131A, 131B) der Gelenkkette (8, 108) angeordnet sind.

6. Fahrtreppe (1) oder Fahrsteig (101) nach einem der Ansprüche 1 bis 3, wobei die Systemrollen (27A, 27B, 127A, 127B) an Gelenkstellen (26, 126) der Gelenkkette (8, 108) und die Laufrollen (28, 128) jeweils zwischen den Gelenkstellen (26, 126) an den Kettenlaschen (25, 131A, 131B) der Gelenkkette (8, 108) angeordnet sind.

7. Fahrtreppe (1) oder Fahrsteig (101) nach einem der Ansprüche 1 bis 6, wobei die Systemrollen (27A, 27B, 127A, 127B) der mindestens einen Gelenkkette (8, 108) abgestuft ausgebildet sind und in einer ersten Hälfte ihrer Rollenbreite (B) einen ersten Rollendurchmesser (D₁) und in einer zweiten Hälfte ihrer Rollenbreite (B) einen zum ersten Rollendurchmesser (D₁) kleineren zweiten Rollendurchmesser (D₂) aufweisen und die Systemrollen (27A, 27B, 127A, 127B) bezogen auf ihre abgestufte Ausgestaltung so an der Gelenkkette (8, 108) angeordnet sind, dass durch einen ersten Teil der Systemrollen (27A, 27B, 127A, 127B) mit ihren ersten Rollendurchmessern (D₁) die erste Spur (S1) und durch einen zweiten Teil der Systemrollen (27A, 27B, 127A, 127B) mit ihren ersten Rollendurchmessern (D₁) die zweite Spur (S2) belegt sind.

8. Fahrtreppe (1) oder Fahrsteig (101) nach einem der Ansprüche 1 bis 6, wobei die Systemrollen (27A, 27B, 127A, 127B) der mindestens einen Gelenkkette (8, 108) in erste Systemrollen (27A, 127A) und zweite Systemrollen (27B, 127B) aufgeteilt sind und die ersten Systemrollen (27A, 127A,) zu den zweiten Systemrollen (27B, 127B) in alternierender Abfolge versetzt an der Gelenkkette (8, 108) angeordnet sind, so dass durch die ersten Systemrollen (27A, 127A,) und die zweiten Systemrollen (27B, 127B) zwei nebeneinanderliegende Spuren (S1, S2) belegt sind.

9. Fahrtreppe (1) oder Fahrsteig (101) nach einem der Ansprüche 1 bis 8, wobei parallel zu mindestens einem Längenabschnitt der Laufschiene (12, 13, 112, 113) mindestens eine Stützschiene (19, 191, 192) im Bereich mindestens einer der durch Systemrollen (27A, 27B, 127A, 127B) belegten Spuren (S1, S2) angeordnet ist, um die über die Stützschiene (19, 191, 192) rollenden Systemrollen (27A, 27B, 127A, 127B) abzustützen.

10. Verfahren zur Modernisierung einer Fahrtreppe (1) oder eines Fahrsteiges (101) durch Ersetzen des bestehenden Stufenbandes beziehungsweise Palettenbandes durch ein Stufenband (7) beziehungsweise Palettenband (107) das mindestens eine Gelenkkette (8, 108) aufweist, die zwischen einem ersten Umlenkbereich (5) und einem zweiten Umlenkbereich (6, 106) der Fahrtreppe (1) oder des Fahrsteiges (101) umlaufend angeordnet ist und an der Gelenkkette (8, 108) Laufrollen (28, 128) sowie Stufen (9) beziehungsweise Paletten (109) angeordnet sind, wobei die Gelenkkette (8, 108) zudem Systemrollen (27A, 27B, 127A, 127B) aufweist und die Laufrollen (28, 128) und Systemrollen (27A, 27B, 127A, 127B) auf zumindest drei zur Umlaufrichtung (U) der Gelenkkette (8, 108) nebeneinanderliegenden Spuren (S1, S2, S3) angeordnet sind, wobei eine der Spuren (S3) durch die Laufrollen (28, 128) belegt ist und zumindest zwei der Spuren (S1, S2) durch die Systemrollen (27A, 27B, 127A, 127B) belegt sind, **dadurch gekennzeichnet, dass** die Laufrollen (28, 128) zwischen den Umlenkbereichen (5, 6, 106) auf Laufschienen (12, 13, 112, 113) abrollen und die Systemrollen (27A, 27B, 127A, 127B) zwischen den Umlenkbereichen (5, 6, 106) zumindest abschnittsweise freigestellt und somit unbelastet sind, dass in den Umlenkbereichen (5, 6, 106) die Systemrollen (27A, 27B, 127A, 127B) mindestens einer der Spuren (S1, S2, S3) in Eingriff mit einem Kettenrad (14, 114) des Umlenkbereichs (5, 6, 106) sind und die Laufrollen (28, 128) freigestellt sind, und dass die Umlenkbereiche (5, 6, 106), die Laufschienen (12, 13, 112, 113) und die Kettenräder (14, 114) an die neuen Gelenkketten (8, 108) angepasst werden.

11. Verfahren zur Modernisierung einer Fahrtreppe (1) oder eines Fahrsteiges (101) nach Anspruch 10, wobei parallel zu mindestens einem Längenabschnitt mindestens einer, zwischen den Umlenkbereichen (5, 6, 106) angeordneten Laufschiene (12, 13, 112, 113), mindestens eine Stützschiene (19, 191, 192) im Bereich mindestens einer der durch Systemrollen (27A, 27B, 127A, 127B) belegten Spuren (S1, S2) angeordnet ist, um die über die Stützschiene (19, 191, 192) rollenden Systemrollen (27A, 27B, 127A, 127B) abzustützen.

## Claims

1. An escalator (1) with a step band (7) or a moving walkway (101) with a pallet band (107), wherein the step band (7) or pallet band (107) comprises at least one sprocket chain (8, 108) that is arranged in a revolving manner between a first deflecting region (5) and a second deflecting region (6, 106) of the escalator (1) or the moving walkway (101), wherein running rollers (28, 128), as well as steps (9) or pallets (109), are arranged on the sprocket chain (8, 108), wherein the sprocket chain (8, 108) furthermore comprises system rollers (27A, 27B, 127A, 127B) and the running rollers (28, 128) and system rollers (27A, 27B, 127A, 127B) are arranged on at least three tracks (S1, S2, S2) that lie adjacent to one another in the revolving direction (U) of the sprocket chain (8, 108), and wherein one of the tracks (S3) is occupied by the running rollers (28, 128) and at least two of the tracks (S1, S2) are occupied by the system rollers (27A, 27B, 127A, 127B), **characterized in that** the running rollers (28, 128) roll on roller rails (12, 13, 112, 113) between the deflecting regions (5, 6, 106) and the system rollers (27A, 27B, 127A, 127B) are at least sectionally released and therefore not subjected to a load between the deflecting regions (5, 6, 106), and **in that** the system rollers (27A, 27B, 127A, 127B) of at least one of the tracks (S1, S2, S3) are in the deflecting regions (5, 6, 106) engaged with a chain wheel (14, 114) of the deflecting region (5, 6, 106) and the running rollers (28, 128) are released.

2. The escalator (1) or moving walkway (101) according to claim 1, wherein the system rollers (27B, 127B) of the second track (S2) are in the respective deflecting region (5, 6, 106) supported on a deflecting curve (21, 136) of the deflecting region (5, 6, 106).

3. The escalator (1) or moving walkway (101) according to claim 2, wherein the system rollers (27A, 27B, 127A, 127B) lie in the respective deflecting region (5, 6, 106) on a base circle (R_{G}) of the chain wheel (14, 114), and in that the base circle radius (R_{G}) is smaller than a radius (R_{U}) of the deflecting curve (21, 136).

4. The escalator (1) or moving walkway (101) according to one of claims 1 to 3, wherein the system rollers (27A, 27B, 127A, 127B) and the running rollers (28, 128) are arranged on link joints (26, 126) of the sprocket chain (8, 108).

5. The escalator (1) or moving walkway (101) according to one of claims 1 to 4, wherein the sprocket chain (8, 108) is composed of chain links with link plates (25, 131A, 131B) that are respectively arranged parallel to one another, and wherein the system rollers (27A, 27B, 127A, 127B) are arranged between the link plates (25, 131A, 131B) and the running rollers (28, 128) are arranged on an outer side of the link plates (25, 131A, 131B) of the sprocket chain (8, 108).

6. The escalator (1) or moving walkway (101) according to one of claims 1 to 3, wherein the system rollers (27A, 27B, 127A, 127B) are arranged on link joints (26, 126) of the sprocket chain (8, 108) and the running rollers (28, 128) are respectively arranged on the link plates (25, 131A, 131B) of the sprocket chain (8, 108) between the link joints (26, 126).

7. The escalator (1) or moving walkway (101) according to one of claims 1 to 6, wherein the system rollers (27A, 27B, 127A, 127B) of the at least one sprocket chain (8, 108) are designed in a stepped manner and have a first roller diameter (D₁) in a first half of their roller width (B) and a second roller diameter (D₂), which is smaller than the first roller diameter (D₁), in a second half of their roller width (B), and wherein the system rollers (27A, 27B, 127A, 127B) are with respect to their stepped design arranged on the sprocket chain (8, 108) in such a way that the first track (S1) is occupied by a first portion of the system rollers (27A, 27B, 127A, 127B) with their first roller diameter (D₁) and the second track (S2) is occupied by a second portion of the system rollers (27A, 27B, 127A, 127B) with their first roller diameter (D₁).

8. The escalator (1) or moving walkway (101) according to one of claims 1 to 6, wherein the system rollers (27A, 27B, 127A, 127B) of the at least one sprocket chain (8, 108) are divided into first system rollers (27A, 127A) and second system rollers (27B, 127B), and wherein the first system rollers (27A, 127A) are arranged on the sprocket chain (8, 108) offset relative to the second system rollers (27B, 127B) in an alternating sequence such that two tracks (S1, S2), which lie adjacent to one another, are occupied by the first system rollers (27A, 127A) and the second system rollers (27B, 127B).

9. The escalator (1) or moving walkway (101) according to one of claims 1 to 8, wherein at least one support rail (19, 191, 192) is arranged parallel to at least a longitudinal section of the roller rail (12, 13, 112, 113) in the region of at least one of the tracks (S1, S2) occupied by the system rollers (27A, 27B, 127A, 127B) in order to support the system rollers (27A, 27B, 127A, 127B) rolling over the support rail (19, 191, 192).

10. A method for modernizing an escalator (1) or a moving walkway (101) by replacing the existing step band or pallet band with a step band (7) or pallet band (107) that comprises at least one sprocket chain (8, 108), which is arranged in a revolving manner between a first deflecting region (5) and a second deflecting region (6, 106) of the escalator (1) or the moving walkway (101), wherein running rollers (28, 128), as well as steps (9) or pallets (109), are arranged on the sprocket chain (8, 108), wherein the sprocket chain (8, 108) furthermore comprises system rollers (27A, 27B, 127A, 127B) and the running rollers (28, 128) and system rollers (27A, 27B, 127A, 127B) are arranged on at least three tracks (S1, S2, S2) that lie adjacent to one another in the revolving direction (U) of the sprocket chain (8, 108), and wherein one of the tracks (S3) is occupied by the running rollers (28, 128) and at least two of the tracks (S1, S2) are occupied by the system rollers (27A, 27B, 127A, 127B), **characterized in that** the running rollers (28, 128) roll on roller rails (12, 13, 112, 113) between the deflecting regions (5, 6, 106) and the system rollers (27A, 27B, 127A, 127B) are at least sectionally released and therefore not subjected to a load between the deflecting regions (5, 6, 106), **in that** the system rollers (27A, 27B, 127A, 127B) of at least one of the tracks (S1, S2, S3) are in the deflecting regions (5, 6, 106) engaged with a chain wheel (14, 114) of the deflecting region (5, 6, 106) and the running rollers (28, 128) are released, and **in that** the deflecting regions (5, 6, 106), the roller rails (12, 13, 112, 113) and the chain wheels (14, 114) are adapted to the new sprocket chains (8, 108).

11. The method for modernizing an escalator (1) or a moving walkway (101) according to claim 10, wherein at least one support rail (19, 191, 192) is arranged parallel to at least a longitudinal section of a roller rail (12, 13, 112, 113) arranged between the deflecting regions (5, 6, 106) in the region of at least one of the tracks (S1, S2) occupied by the system rollers (27A, 27B, 127A, 127B) in order to support the system rollers (27A, 27B, 127A, 127B) rolling over the support rail (19, 191, 192).

## Revendications

1. Escalier roulant (1), pourvu d'une bande de marches (7) ou trottoir roulant (101) pourvu d'une bande de palettes (107), la bande de marches (7) ou la bande de palettes (107) comportant au moins une chaîne articulée (8, 108) qui est placée en révolution entre une première zone de renvoi (5) et une deuxième zone de renvoi (6, 106) de l'escalier roulant (1) ou du trottoir roulant (101) et sur la chaîne articulée (8, 108) étant placés des galets de roulement (28, 128), ainsi que des marches (9), respectivement des palettes (109), la chaîne articulée (8, 108) comportant en outre des galets de système (27A, 27B, 127A, 127B) et les galets de roulement (28, 128) et les galets de système (27A, 27B, 127A, 127B) étant placés sur au moins trois pistes (S1, S2, S3) placées côte à côte par rapport au sens de révolution (U) de la chaîne articulée (8, 108) et l'une des pistes (S3) étant garnie avec les galets de roulement (28, 128) et au moins deux des pistes (S1, S2) étant garnies avec les galets de système (27A, 27B, 127A, 127B), **caractérisé en ce qu**'entre les zones de renvoi (5, 6, 106), les galets de roulement (28, 128) se déroulent sur des rails de roulement (12, 13, 112, 113) et entre les zones de renvoi (5, 6, 106), les galets de système (27A, 27B, 127A, 127B) sont libérés et ainsi non contraints au moins par endroits, et en ce que dans les zones de renvoi (5, 6, 106), les galets de système (27A, 27B, 127A, 127B) d'au moins l'une des pistes (S1, S2, S3) s'engrènent dans un pignon (14, 114) de la zone de renvoi (5, 6, 106) et les galets de roulement (28, 128) sont libérés.

2. Escalier roulant (1) ou trottoir roulant (101) selon la revendication 1, dans la zone de renvoi (5, 6, 106) respective, les galets de système (27B, 127B) de la deuxième piste (S2) étant soutenus sur une came de renvoi (21, 136) de la zone de renvoi (5, 6, 106).

3. Escalier roulant (1) ou trottoir roulant (101) selon la revendication 2, dans la zone de renvoi (5, 6, 106) respective, les galets de système (27A, 27B, 127A, 127B) reposant sur un cercle de base (R_{G}) du pignon (14, 114) et le rayon du cercle de base (R_{G}) étant inférieur à un rayon (R_{U}) de la came de renvoi (21, 136).

4. Escalier roulant (1) ou trottoir roulant (101) selon l'une quelconque des revendications 1 à 3, les galets de système (27A, 27B, 127A, 127B) et les galets de roulement (28, 128) étant placés sur des points d'articulation (26, 126) de la chaîne articulée (8, 108).

5. Escalier roulant (1) ou trottoir roulant (101) selon l'une quelconque des revendications 1 à 4, la chaîne articulée (8, 108) étant formée de maillons de chaîne pourvus d'éclisses de chaîne (25, 131A, 131B), placées respectivement à la parallèle les unes des autres et les galets de système (27A, 27B, 127A, 127B) étant placés entre les éclisses de chaîne (25, 131A, 131B) et les galets de roulement (28, 128), sur une face extérieure des éclisses de chaîne (25, 131A, 131B) de la chaîne articulée (8, 108).

6. Escalier roulant (1) ou trottoir roulant (101) selon l'une quelconque des revendications 1 à 3, les galets de système (27A, 27B, 127A, 127B) étant placés sur des points d'articulation (26, 126) de la chaîne articulée (8, 108) et les galets de roulement (28, 128) étant placés respectivement entre les points d'articulation (26, 126) sur les éclisses de chaîne (25, 131A, 131B) de la chaîne articulée (8, 108).

7. Escalier roulant (1) ou trottoir roulant (101) selon l'une quelconque des revendications 1 à 6, les galets de système (27A, 27B, 127A, 127B) de l'au moins une chaîne articulée (8, 108) étant conçus en forme d'échelons et présentant dans une première moitié de leur largeur de galet (B) un premier diamètre de galet (D₁) et dans une deuxième moitié de leur largeur de galet (B) un deuxième diamètre de galet (D₂) inférieur au premier diamètre de galet (D₁) et en rapport à leur conception échelonnée, les galets de système (27A, 27B, 127A, 127B) étant placés sur la chaîne articulée (8, 108) de telle sorte que par une première partie des galets de système (27A, 278, 127A, 127B) avec leurs premiers diamètres de galets (D₁), la première piste (S₁) et par une deuxième partie des galets de système (27A, 27H, 127A, 127B) avec leurs premiers diamètres de galets (D₁), la deuxième piste (S2) soient garnies.

8. Escalier roulant (1) ou trottoir roulant (101) selon l'une quelconque des revendications 1 à 6, les galets de système (27A, 27B, 127A, 127B) de l'au moins une chaîne articulée (8, 108) étant répartis en premiers galets de système (27A, 127A) et en deuxièmes galets de système (27B, 127B) et les premiers galets de système (27A, 127A,) étant placés en décalage en séquence alternée par rapport aux deuxièmes galets de système (27B, 127B) sur la chaîne articulée (8, 108) de sorte que deux pistes (S1, S2) placées côte à côte soient garnies par les premiers galets de système (27A, 127A,) et les deuxièmes galets de système (27B, 127B).

9. Escalier roulant (1) ou trottoir roulant (101) selon l'une quelconque des revendications 1 à 8, dans la zone des pistes (S1, S2) garnies par les galets de système (27A, 27B, 127A, 127B), à la parallèle d'au moins un tronçon longitudinal du rail de roulement (12, 13, 112, 113) étant placé au moins un rail de support (19, 191, 192) pour soutenir les galets de système (27A, 27B, 127A, 127B) qui se déroulent sur le rail de support (19, 191, 192).

10. Procédé, destiné à moderniser un escalier roulant (1) ou un trottoir roulant (101) par remplacement de la bande de marches, respectivement de la bande de palettes existante par une bande de marches (7), respectivement une bande de palettes (107) qui comporte au moins une chaîne articulée (8, 108) qui est placée en révolution entre une première zone de renvoi (5) et une deuxième zone de renvoi (6, 106) de l'escalier roulant (1) ou du trottoir roulant (101) et sur la chaîne articulée (8, 108) sont placés des galets de roulement (28, 128), ainsi que des marches (9), respectivement des palettes (109), la chaîne articulée (8, 108) comportant en outre des galets de système (27A, 27B, 127A, 127B) et les galets de roulement (28, 128) et les galets de système (27A, 27B, 127A, 127B) étant placés sur au moins trois pistes (S1, S2, S3) placées côte à côte par rapport au sens de révolution (U) de la chaîne articulée (8, 108), l'une des pistes (S3) étant garnie avec les galets de roulement (28, 128) et au moins deux des pistes (S1, S2) étant garnies avec les galets de système (27A, 27B, 127A, 127B), **caractérisé en ce qu'**entre les zones de renvoi (5, 6, 106), les galets de roulement (28, 128) se déroulent sur des rails de roulement (12, 13, 112, 113) et entre les zones de renvoi (5, 6, 106), les galets de système (27A, 27B, 127A, 127B) sont libérés et ainsi non contraints au moins par endroits, **en ce que** dans les zones de renvoi (5, 6, 106), les galets de système (27A, 27B, 127A, 127B) d'au moins l'une des pistes (S1, S2, S3) s'engrènent dans un pignon (14, 114) de la zone de renvoi (5, 6, 106) et les galets de roulement (28, 128) sont libérés, et **en ce qu'**on adapte les zones de renvoi (5, 6, 106), les rails de roulement (12, 13, 112, 113) et les pignons (14, 114) aux nouvelles chaînes articulées (8, 108).

11. Procédé, destiné à moderniser un escalier roulant (1) ou un trottoir roulant (101) selon la revendication 10, à la parallèle d'au moins un tronçon longitudinal d'au moins un rail de roulement (12, 13, 112, 113) placé entre les zones de renvoi (5, 6, 106), au moins un rail de support (19, 191, 192) étant placé dans la zone d'au moins l'une des pistes (S1, S2) garnies par les galets de système (27A, 27B, 127A, 127B), pour soutenir les galets de système (27A, 27B, 127A, 127B) qui se déroulent sur le rail de support (19, 191, 192).
